# DEMANDE DE BREVET EUROPEEN

(11) **EP 0 752 577 A1**
(43) Date de publication de la demande: **08.01.1997**
(21) Numéro de dépôt: 96460023.3
(22) Date de dépôt: 04.07.1996
(51) Int. Cl.: G01G 19/387

(54) **Procédé et dispositif de conditionnement à poids constant de tranches de viande ou de poisson**

(30) Priorité: 07.07.1995 FR 9508578
(71) Demandeur: I.R. TECH (SARL), 56520 Guidel (FR)
(72) Inventeur: Sourbes, Jean-Louis, 56520 Guidel (FR)
(74) Mandataire: Schmit, Christian Norbert Marie

(57) **Abrégé**

L'invention concerne un procédé et un dispositif de conditionnement et de transfert de tranches fines de viande ou de poisson.

Chaque tranche est pesée au moyen d'une doseuse cumulative (3) qui effectue un choix de tranches pour chaque sortie d'un convoyeur reconstitueur (5) telle que le nombre de tranches, fixe ou variable, au niveau de chaque sortie, présente un poids total constant pour un lot déterminé.

L'invention s'applique plus particulièrement au conditionnement du saumon fumé.

## Description

L'invention concerne un procédé et un dispositif de conditionnement à poids constant de tranches de viande ou de poisson notamment de tranches de saumon fumé.

Actuellement, le conditionnement des tranches de saumon fumé peut s'effectuer manuellement. Il s'agit d'un produit coûteux et inadapté tant aux besoins actuels des industriels, fabricants et distributeurs, que de la clientèle. La demande actuelle à tous les niveaux cités ci-avant se fait à poids fixe, pour faciliter la gestion des stocks, les commandes, les livraisons, la mise en rayon, la promotion du produit... . Le consommateur désire connaître la composition du lot qu'il achète, à savoir, le nombre de tranches certes, mais aussi le poids de l'ensemble. De plus, il souhaite souvent axer son achat sur un poids déterminé, évitant ainsi, en ne se fiant qu'au nombre de tranches, de se trouver face à un manque de produit au moment de son utilisation.

On sait compter un nombre de tranches, mais pour ce qui concerne le saumon fumé, la complexité de formation d'une unité de conditionnement à poids constant vient du fait de la non-uniformité en poids et en taille des tranches issues des filets de poisson, ainsi que de la difficulté de manipulation des tranches. Il existe des procédés automatiques qui ont déjà été décrits notamment dans les demandes européennes de brevet N°0 246 668 et N°0 332 895 de WEBER, GUNTHER. Dans les deux cas, le poids constant est obtenu en asservissant le contrôle du poids à la commande de l'organe de découpe. Ce procédé, valable pour des blocs de viande par exemple, s'adapterait très mal au traitement des produits qui doivent être découpés en tranches fines comme c'est le cas notamment dans la découpe du saumon fumé.

La présente invention permet de s'affranchir de cette difficulté et consiste, non plus à agir sur l'organe de coupe, mais sur le tri en fonction de leur poids de chacune des tranches.

Dans ces conditions, les plaquettes de conditionnement peuvent recevoir des tranches de poids variable mais dont la somme correspond à une valeur prédéterminée grâce à un système d'adressage de chaque tranche à une plaquette réceptrice déterminée.

L'invention concerne plus précisément un procédé de conditionnement de tranches fines de viande ou de poisson destinées à être disposées sur une plaquette pour reconstituer un lot de poids prédéterminé constant, caractérisé en ce qu'il consiste à saisir le poids de chacune des tranches, à mémoriser ces poids, à établir une corrélation entre les différents poids des tranches au niveau d'un appareil de mesure de poids cumulative, à sélectionner lesdites tranches de façon à les orienter sur une ligne de conditionnement vers l'une des sorties jalonnant ladite ligne, et à les déposer sur une plaquette réceptrice présente en cette sortie, pour les réunir de manière à obtenir des lots de tranches dont la somme des poids individuels est égale à un poids total préalablement fixé et constant pour une sortie de ligne donnée.

L'invention concerne également un dispositif de mise en oeuvre de ce procédé de conditionnement par lot de tranches de viande ou de poisson à poids constant, caractérisé en ce qu'il comprend une ligne de conditionnement formée d'un convoyeur reconstitueur comprenant avec un tapis sustentateur multibandes assurant le transfert par sustentation par le vide de chaque tranche, le parcours dudit convoyeur reconstitueur étant jalonné par une pluralité de sorties, chacune d'entre elles étant équipée d'un convoyeur de plaquettes réceptrices mettant en position une des plaquettes dans la zone de dépôt des tranches, de telle sorte que lorsqu'une tranche sélectionnée pour un lot déterminé arrive au niveau de la sortie qui lui est attribuée, un peigne éjecteur entre en action pour libérer de l'effet d'aspiration au niveau du tapis multibandes la tranche concernée qui tombe alors sur ladite plaquette correctement positionnée pour la recevoir, chacune des sorties recevant ainsi, par plaquette, un nombre de tranches de poids variable, mais dont la somme est égale au poids final constant prédéterminé pour chacune desdites sorties.

L'invention sera mieux comprise à l'aide des explications qui vont suivre et des figures jointes parmi lesquelles :
les figures 1 et 2 sont deux vues, respectivement de côté et de dessus, d'une installation de mise en oeuvre du procédé selon l'invention ;
la figure 3 représentent schématiquement en perspective une partie de cette installation au niveau d'une sortie du convoyeur reconstitueur ; et
les figures 4 et 5 illustrent schématiquement cette même partie, à deux stades du fonctionnement.

Pour plus de clarté, les mêmes éléments portent les mêmes références dans toutes les figures.

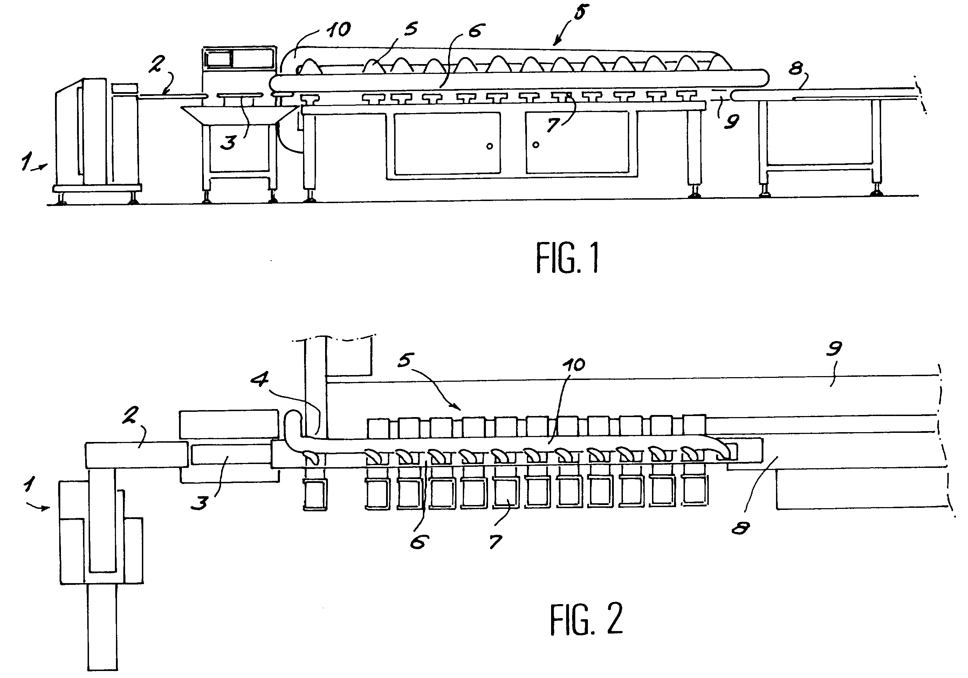

Les figures 1 et 2 représentent respectivement une ligne de conditionnement vue de profil et vue du dessus qui permettent de visualiser dans l'espace et dans le temps les différentes étapes du procédé conforme à l'invention.

Dans un premier temps, le saumon fumé, produit pris ici à titre d'exemple non limitatif, est refroidi pour présenter une rigidité suffisante, et est découpé en tranches au moyen d'un trancheur de type connu 1. Ces tranches sont recueillies et acheminées au moyen d'un tapis 2, dit d'approvisionnement, situé en amont de la ligne de conditionnement. C'est à partir de ce moment qu'intervient la combinaison des étapes caractéristiques de l'invention, à savoir, l'acquisition du poids de chaque tranche qui se présente au niveau d'un appareil de pesage dit "doseuse cumulative" 3 dont la fonction est triple : d'une part, mémoriser le poids de la tranche ; d'autre part, adresser ladite tranche vers l'une des (n) sorties 7 d'un convoyeur reconstitueur 5 comprenant un tapis de sustentation 6 pour constituer des lots à poids constant ; enfin, comptabiliser pour chacun des lots le nombre de tranches ainsi adressées. Un tel procédé permet, grâce au choix des tranches, d'ajuster le poids final du produit conditionné à une valeur déterminée.

Les tranches dont le poids est supérieur ou inférieur à une norme donnée sont évacuées en une première sortie sur un tapis d'évacuation 4 situé en amont du convoyeur 5 pour être traitées séparément selon un autre procédé, le plus souvent manuellement.

En aval du convoyeur reconstitueur 5, les lots déposés sur des plaquettes chargées conformément au cahier des charges (c'est-à-dire présentant un poids prédéterminé de produit), sont évacuées par un tapis de transfert 9 vers le poste de mise sous vide et de traitement final de l'emballage.

Il peut se faire que, malgré l'élimination en amont, des tranches ne trouvent pas d'affectation pour l'une ou l'autre des (n) sorties 7 : dans ce cas, elles sont alors récupérées en 8 pour être traitées manuellement.

L'invention concerne également un dispositif de mise en oeuvre du procédé décrit précédemment et notamment l'architecture des moyens de convoyage et de positionnement des tranches sur leurs plaquettes réceptives au niveau de chacune des (n) sorties 7 déjà énoncées précédemment.

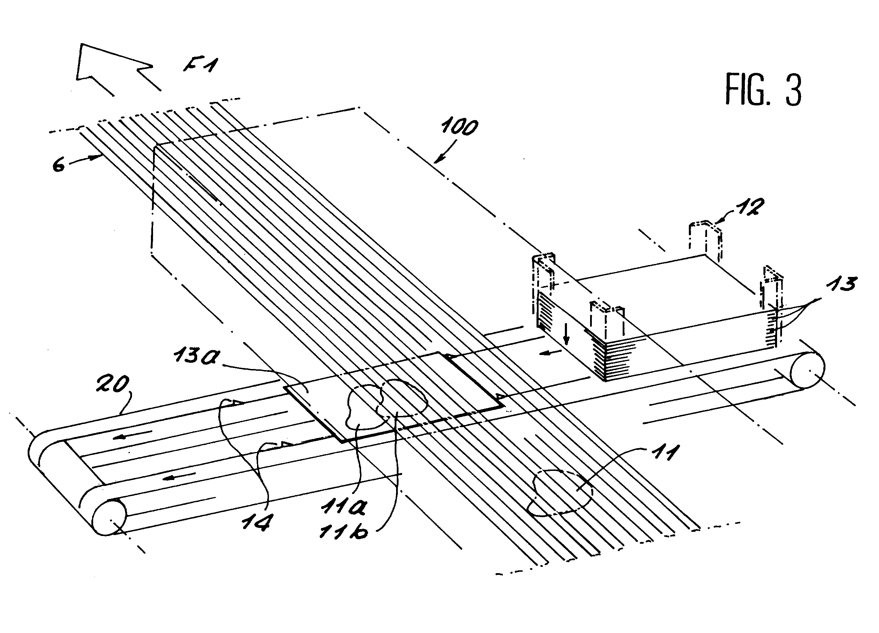

Comme le montre la figure 3, tout le long du convoyeur reconstitueur 5, on retrouve la combinaison 100 : d'une part, le tapis sustentateur 6 portant par aspiration, comme cela sera expliqué plus loin, les tranches de saumon 11 se déplaçant selon la flèche F₁ ; d'autre part perpendiculairement au tapis sustentateur 6, un distributeur 12 de plaquettes réceptrices 13 alimentant un convoyeur de plaquettes 20. Chacune des plaquettes (par exemple la plaquette 13a) est prise en charge par le convoyeur de plaquettes 20, pour venir se positionner contre des taquets 14, et recevoir, conformément au procédé selon l'invention, les tranches préalablement sélectionnées (11a, 11b...), de telle sorte que la somme de leurs poids corresponde au poids constant prédéterminé. Le tout forme un lot prêt à être conditionné.

On retrouve une telle combinaison 100 à chacune des (n) sorties 7 évoquées précédemment, pluralité de sorties qui jalonnent le parcours dudit convoyeur reconstitueur 5. Chaque plaquette munie de son lot de tranches présentant un poids constant peut alors être transférée vers la station de conditionnement final.

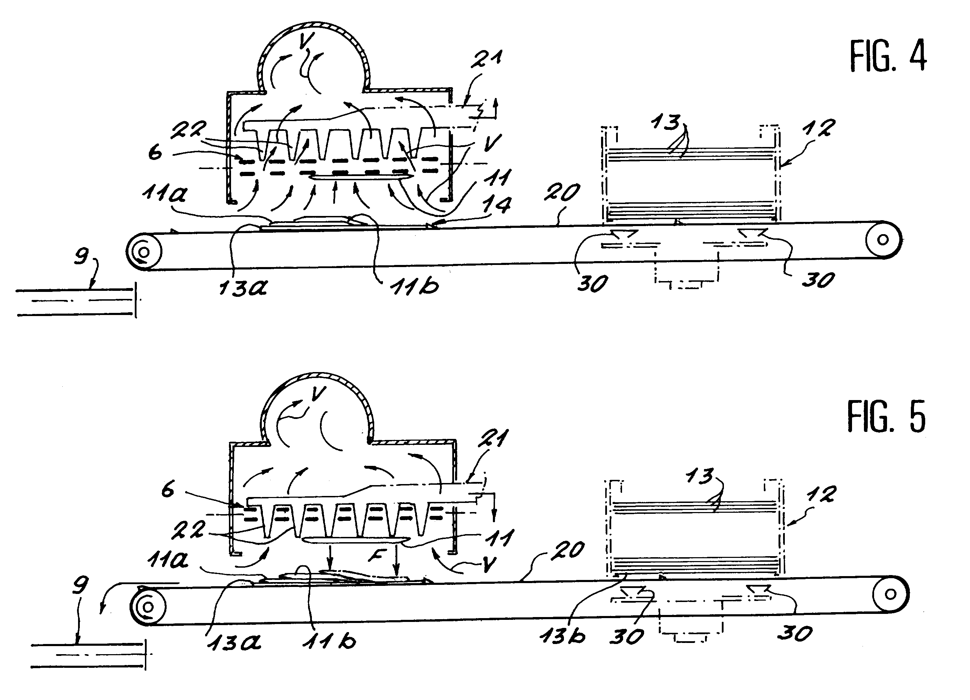

Les figures 4 et 5 illustrent schématiquement les moyens mis en oeuvre pour transporter par sustentation les tranches finement coupées et les positionner sans dommage sur la plaquette chargée de les recevoir.

Dans la figure 4, on se trouve au stade 1 qui correspond au transport par le convoyeur 6 des tranches et dans la figure 5, au stade 2, c'est-à-dire celui qui correspond au dépôt d'une tranche sur la plaquette.

Comme le montrent les deux figures, le tapis sustentateur 6 est soumis à l'action d'un vide symbolisé par les flèches V, obtenu à l'aide d'un ensemble d'aspiration. Le tapis 6 est du type multibandes et coopère avec un peigne 21 dont les dents 22 peuvent passer dans les espaces entre bandes du tapis. Ce peigne 21 monté sur une coulisse verticale est entraîné par un vérin pneumatique (non représenté). Sur la figure 4, ce peigne 21 est en position haute, il en résulte que la tranche 11 qui se trouve à son niveau reste plaquée par aspiration contre le tapis multibandes 6. Lorsqu'elle se trouve parfaitement positionnée face à la plaquette réceptrice 13a sur laquelle peuvent se trouver déjà posées une ou plusieurs tranches 11a, 11b par exemple, le peigne 21 est actionné pour éjecter la tranche (figure 5), c'est-à-dire déplacé en position basse, ses dents 22 traversant alors les espaces entre les bandes du tapis 6. Etant chassée de la zone d'action du vide, la tranche 11, sous l'action de la pesanteur (flèche f), tombe sur la plaquette 13a et vient rejoindre les tranches 11a et 11b déjà en place, sachant qu'entre deux dépôts de tranche consécutifs, la plaquette 13a est avancée d'un pas par le convoyeur 20. Quand le poids total désiré est atteint, la plaquette 13a chargée sera évacuée vers le poste de thermoformage par le tapis de transfert 9. Une autre plaquette 13b est alors prélevée par un système de ventouses 30 au niveau du distributeur 12 de plaquettes 13 et acheminée à la place de la plaquette 13a au niveau de la zone de chute des tranches. La plaquette 13b est prise au bas de la pile par les deux ventouses 30 fixées chacune à l'extrémité de tiges de vérins pneumatiques qui, en se rétractant, déposent la plaquette sur le convoyeur de plaquettes 20. Les vitesses d'amenage rapide et de reconstitution des tranches sur la plaquette sont obtenues au moyen d'un variateur de vitesse à changement de fréquence.

L'ensemble des mouvements concernant le convoyeur reconstitueur, les peignes éjecteurs et les distributeurs de plaquettes qui sont le plus souvent en carton revêtu d'aluminium de chaque côté est géré par un automate programmable qui prend ses informations dans le système de pesage (doseuse 3 de la figure 1).

Éventuellement, au cours de son transfert, la tranche peut recevoir d'un distributeur un intercalaire en polypropylène. La distribution se fait à partir d'un rouleau en synchronisme avec la tranche. La découpe est assurée par un couteau circulaire se déplaçant contre une lame en acier trempé.

Tout au long de leur trajet, les tranches pesées, éventuellement équipées de leur intercalaire, sont maintenues en sustentation par le vide contre la partie basse du tapis multibandes. Les tranches se déplacent ainsi pas à pas. Ce mouvement pas à pas est en parfait synchronisme avec le mouvement du trancheur. Lorsque la tranche arrive au poste sélectionné, elle est décollée verticalement du tapis comme cela a été décrit précédemment. Elle est positionnée sur une plaquette ou carton de réception. L'avance d'un pas de cette plaquette après chaque éjection détermine un rangement de tranches, d'où le nom de convoyeur reconstitueur énoncé précédemment.

Un procédé et un dispositif selon l'invention présentent de nombreux avantages. La gestion et l'exploitation du filet de poisson s'en trouvent favorisées. De multiples combinaisons de programme permettent d'optimiser le rendement de la ligne en affectant au mieux les postes de transfert des tranches disponibles. On peut, notamment, traiter plusieurs poids en simultané. Quand la cible en poids et en nombre de pièces est atteinte par un poste, la plaquette réceptrice avance pour sortir de la zone de réception et laisse place à une autre plaquette. L'acheminement de la plaquette chargée vers un convoyeur collecteur est facilement réalisable.

Bien que l'exemple choisi et décrit se soit rapporté à du saumon fumé, l'invention s'applique au conditionnement de tout produit se présentant en tranches fines.

## Revendications

1. Procédé de conditionnement de tranches fines de viande ou de poisson destinées à être disposées sur une plaquette pour reconstituer un lot de poids prédéterminé constant, caractérisé en ce qu'il consiste à saisir le poids de chacune des tranches, à mémoriser ces poids, à établir une corrélation entre les différents poids des tranches au niveau d'un appareil de mesure de poids cumulative, à sélectionner lesdites tranches de façon à les orienter sur une ligne de conditionnement vers l'une des sorties jalonnant ladite ligne, et à les déposer sur une plaquette réceptrice présente en cette sortie, pour les réunir de manière à obtenir des lots de tranches dont la somme des poids individuels est égale à un poids total préalablement fixé et constant pour une sortie de ligne donnée.

2. Procédé selon la revendication 1, caractérisé en ce que, outre le tri des tranches présentant chacune un poids donné qui, combinées entre elles, correspond au poids total du lot recherché, le nombre de tranches composant ledit lot est mémorisé.

3. Procédé selon l'une des revendications précédentes, caractérisé en ce que durant le chargement de la plaquette réceptrice, celle-ci est avancée après chaque dépôt d'une tranche de manière à réaliser un rangement des tranches.

4. Dispositif de mise en oeuvre d'un procédé de conditionnement par lot de tranches de viande ou de poisson à poids constant selon l'une des revendications précédentes, caractérisé en ce qu'il comprend une ligne de conditionnement formée d'un convoyeur reconstitueur (5) comprenant un tapis sustentateur multibandes (6) assurant le transfert par sustentation par le vide de chaque tranche (11, 11a, 11b), le parcours dudit convoyeur reconstitueur (5) étant jalonné par une pluralité de (n) sorties, chacune d'entre elles étant équipée d'un convoyeur (20) de plaquettes réceptrices (13, 13a, 13b) mettant en position une des plaquettes dans la zone de dépôt des tranches, de telle sorte que lorsqu'une tranche sélectionnée pour un lot déterminé arrive au niveau de la sortie qui lui est attribuée, un peigne éjecteur (21) entre en action pour libérer de l'effet d'aspiration au niveau du tapis multibandes (6) la tranche concernée qui tombe alors sur ladite plaquette correctement positionnée pour la recevoir, chacune des sorties recevant ainsi, par plaquette, un nombre de tranches de poids variable, mais dont la somme est égale au poids final constant prédéterminé pour chacune desdites sorties.

5. Dispositif selon la revendication 4, caractérisé en ce qu'en amont du convoyeur reconstitueur (5), les tranches présentant un poids hors normes sont prises en charge par un tapis d'évacuation (4) pour être traitées séparément.

6. Dispositif selon l'une des revendications 4 et 5, caractérisé en ce qu'en aval du convoyeur reconstitueur (5), les tranches qui, bien que dans les normes, n'ont pu trouver d'affectation pour l'une ou l'autre des sorties, sont récupérées pour être traitées manuellement.

7. Dispositif selon l'une des revendications 4 à 6, caractérisé en ce que le peigne (21) comporte des dents (22) et est équipé de moyen lui permettant d'occuper une première position haute telle que l'effet d'aspiration plaque la tranche contre le tapis multibandes (6) et une seconde position basse faisant que les dents (22) passent entre les bandes dudit tapis (6) en chassant la tranche hors de la zone d'aspiration, la tranche tombant alors sous l'effet de la pesanteur.

8. Dispositif selon l'une des revendications 4 à 7, caractérisé en ce que les vitesses d'amenage rapide et de reconstitution des tranches sur les plaquettes (13) sont obtenues au moyen d'un variateur de vitesse à changement de fréquence.

9. Dispositif selon l'une des revendications 4 à 8, caractérisé en ce que chaque plaquette réceptrice (13) est prélevée au moyen de ventouses (30) pour être transférée et positionnée au moyen de taquets (14) dans la zone où doit être déposé le lot de tranches sur la plaquette réceptrice (13a) en cours de chargement.
